# EUROPÄISCHE PATENTANMELDUNG

(11) **EP 1 939 039 A1**
(43) Veröffentlichungstag der Anmeldung: **02.07.2008**
(21) Anmeldenummer: 08005405.9
(22) Anmeldetag: 25.07.2001
(51) Int. Cl.: B60Q 1/42

(54) **Rückstelleinrichtung für einen verrastbaren Schalter eines Kraftfahrzeuges**

(30) Priorität: 03.08.2000 DE 10037760
(62) Teilanmeldung aus: 01117983.5
(71) Anmelder: Delphi Technologies, Inc., Troy, Michigan 48007 (US)
(72) Erfinder: Rudolph, Gerd, 55459 Aspisheim (DE)
(74) Vertreter: Becker, Bernd

(57) **Zusammenfassung**

Bei einer Rückstelleinrichtung für einen Schalter (6) eines Kraftfahrzeuges, insbesondere eines Blinkerschalters, mit einem schwenkbar gelagerten, verrastbaren Schalthebel (34) mit einem federbelasteten Rastelement, das mit mindestens einer Schaltstellung einer gehäuseseitigen Rastkurve (39) zusammenwirkt, wobei eine elektromechanische Verstelleinrichtung (42) rechnergesteuert die Verrastung (56) des Schalthebels (34) aufhebt, umfasst die Verstelleinrichtung (42) mindestens einen Elektromagneten (47), der rechnergesteuert aktiviert auf die magnetische oder mit einer magnetischen Platte (46) versehene Rastkurve (39) wirkt und die Verrastung (56) des Schalthebels (34) löst.

## Beschreibung

Die Erfindung bezieht sich auf eine Rückstelleinrichtung für einen Schalter eines Kraftfahrzeuges, insbesondere eines Blinkerschalters, mit einem schwenkbar gelagerten, verrastbaren Schalthebel mit einem federbelasteten Rastelement, das mit mindestens einer Schaltstellung einer gehäuseseitigen Rastkurve zusammenwirkt, wobei eine elektromechanische Verstelleinrichtung rechnergesteuert die Verrastung des Schalthebels aufhebt.

Die den nächstliegenden Stand der Technik bildende US-A-4 900 946 offenbart eine Rückstelleinrichtung für einen Schalter eines Kraftfahrzeuges mit einem schwenkbar gelagerten, verrastbaren Schalthebel mit einem federbelasteten Rastelement, das mit mindestens einer Schaltstellung einer gehäuseseitigen Rastkurve zusammenwirkt, wobei eine elektromechanische Verstelleinrichtung rechnergesteuert die Verrastung des Schalthebels aufhebt. Ein Kolben ist in einer Spule gelagert, der sich einerseits auf einer gefedert gelagerten Scheibe abstützt und andererseits eine in einem elastischen Element angeordnete Rastkurve trägt, in der ein Rastelement eines Schalters gleitet. Die federnde Lagerung des Rastelementes ist durch eine in Axialrichtung verlagerbare Anordnung des als Zugschalter ausgebildeten Betätigungselementes realisiert. Um eine Verrastung des Rastelementes zulösen, wird die Spule mit Spannung beaufschlagt, worauf sich der Kolben in der Spule aufgrund der nunmehr vorhandenen Magnetwirkung verlagert und dabei die Rastkurve mitnimmt.

Aus der DE-C-27 21 879 ist ein Lenkstockschalter mit einem getasteten Blinkerschalter bekannt, dessen Schalthebel für das Fahrbahnwechselblinken oder für die Fahrtrichtungsanzeige nach rechts und nach links jeweils nacheinander einen oder zwei zugeordnete Tastschalter beaufschlagt. Der Einschaltzustand des Blinkerschalters wird mittels einer elektronischen Halteeinrichtung gespeichert und durch eine elektronische Rücksetzeinrichtung wird die Halteeinrichtung zurückgesetzt. Der Schalthebel wird nach seiner Betätigung durch eine federbeaufschlagte Schaltbrücke selbsttätig in eine Neutralstellung zurückgestellt.

Im weiteren offenbart die DE 197 58 288 A1 eine Vorrichtung zur drehrichtungsgekoppelten Rückstellung eines mit einer Lenksäule zusammenwirkenden Blinkerschalters in einem Kraftfahrzeug mit einem um eine Drehachse schwenkbaren Blinkerhebel, wobei der Blinkerhebel jeweils in eine von zwei, in der gewünschten Blinkstellung entsprechende Betriebstellung schwenkbar ist. Zur Führung des linken Blinkerhebelendes ist eine ortsfest angeordnete Kulisse vorgesehen. Der Schalter umfasst zwei auf einem Rastelement angeordnete Rastungen, die über die Kulissenkontur hervorstehen und jeweils das Blinkerhebelende in einer Betriebstellung halten. Das Rastelement ist bewegbar, so dass jeweils eine Rastung zumindest bündig mit der Kulissenkontur abschließt und den in der Betriebstellung gehaltenen Blinkerhebel freigibt, wobei ein lenksäulenfestes Betätigungselement auf das Rastelement einwirkt und dieses verschwenkt. Der Blinkerschalter muss in unmittelbarer Nähe der Lenksäule angeordnet sein und zwischen dem Betätigungselement und dem Rastelement dürfen sich keine weiteren Bauteile befinden, um die Funktion der Vorrichtung sicherzustellen.

Darüberhinaus ist aus der DE 27 25 805 C2 eine Einrichtung zum Ausschalten eines Fahrtrichtungsanzeigers eines Kraftfahrzeuges nach einer Kurvenfahrt bekannt, wobei ortsfeste, mittels eines an der Lenksäule angebrachten Magneten magnetfeldgesteuerte Geber vorgesehen sind. Diesen Gebern ist ein elektronischer Drehrichtungsdiskriminator nachgeschaltet, der in Abhängigkeit von der Signalfolge der Geber beim Rückdrehen des Lenkrades nach einer Kurvenfahrt die Ausschaltung der Fahrtrichtungsanzeige bewirkt. Diese Einrichtung ist lediglich in Verbindung mit einem getasteten Blinkerschalter zu verwenden, da sie nicht mit einer Rastung zusammenwirkt, sondern lediglich die Fahrtrichtungsanzeige ausschaltet.

Ferner sind Wischer-/Wascherschalter für Kraftfahrzeuge bekannt, deren Schalthebel für die Front-Wischerfunktionen im und gegen den Uhrzeigersinn verschwenkbar in einem Gehäuse gelagert sind und für die Front/Wascher- und Heck Wischer-/Wascherfunktionen sind die Schalthebel in und gegen die Richtung eines Armaturenbrettes verschwenkbar gelagert. Die Schalterfunktionen können sowohl mechanisch verrastend als auch getastet ausgeführt werden.

Es ist Aufgabe der Erfindung, eine Rückstelleinrichtung für einen Schalter eines Kraftfahrzeuges der eingangs genannten Art zu schaffen, die eine Aufhebung der Verrastung mit einem geringen mechanischen Aufwand ermöglicht.

Erfindungsgemäß wird die Aufgabe dadurch gelöst, dass die Verstelleinrichtung mindestens einen Elektromagneten umfasst, der rechnergesteuert aktiviert auf die magnetische oder mit einer magnetischen Platte versehene Rastkurve wirkt und die Verrastung des Schalthebels löst.

Die Aufhebung der Verrastung des Schalters erfolgt somit nicht mittels einer kraftfahrzeugseitigen Rücksetzung sondern mittels der elektromechanischen Verstelleinrichtung, die dem Schalter direkt zugeordnet ist.'Anstatt einer aufwendigen Mechanik zur Beaufschlagung der Rastung, die zwischen derselben und dem Kraftfahrzeug wirkt, erfolgt die Kopplung mit dem Kraftfahrzeug über den Bordrechner. Falls die Aufhebung der Verrastung in Abhängigkeit von dem Drehwinkel einer Lenksäule erfolgen soll, wie es beispielsweise bei einem Blinkerschalter erforderlich ist, muss der Schalter nicht in unmittelbarer Nähe der Lenksäule angeordnet und mechanisch mit dieser gekoppelt werden. Vielmehr wird der Drehwinkel der Lenksäule von dem Bordrechner erfasst, der gleichfalls das Setzen bzw. Nichtsetzen des Schalters erkennt. Falls ein vorbestimmter Drehwinkel erreicht ist, spricht der Bordrechner die Verstelleinrichtung zur Aufhebung der Verrastung des Schalters an. Der Bordrechner kann dies selbstverständlich auch beim Vorliegen anderer relevanter Daten, wie beispielsweise bei Ablauf einer vorgegebenen Zeitspanne oder bestimmter Reaktionen des Fahrers, veranlassen.

Das Zusammenwirken des Elektromagneten mit der magnetischen oder mit der magnetischen Platte versehenen Rastkurve bei dessen Aktivierung genügt, um der Rastkurve einen Impuls zum Verlassen ihrer Ausgangsstellung aufzuprägen, und somit die Verrastung zwischen der Rastkurve und dem Schalthebel in seiner verrasteten Schaltstellung aufzuheben. Bei einer Fertigung der Rastkurve aus Kunststoff wird eine Metallisierung desselben in der Regel nicht ausreichend sein, um die erforderliche Magnetwirkung zu erzielen, weshalb die metallische Platte in entsprechender Größe als Einlegeteil oder nachträglich zu montierendes Teil der Rastkurve zugeordnet wird.

Bevorzugt ist die Platte in jeweils eine Seitenwand oder die Rückwand der Rastkurve eingelassen und jeder Platte ein Elektromagnet zugeordnet. Somit lässt sich die Rastkurve durch ein Anziehen des einen Elektromagneten in eine Stellung bringen, in der der Schalthebel in einer Schaltstellung verrasten kann, und durch das Anziehen des anderen Elektromagneten wird die Rastkurve aus dieser Stellung herausbefördert und die Verrastung aufgehoben.

Um mehrere verastende Schaltstellungen des Schalthebels bzw. ein Lösen derselben zu realisieren, ist die Rastkurve in einem Gehäuse geführt, wobei zwischen den die Platten aufweisenden Seitenwänden sowie den dazu korrespondierenden Gehäusewänden Druckfedern angeordnet sind, die die Rastkurve in ihrer Ausgangslage halten. Aus der Ausgangsstellung der Rastkurve kann der Schalthebel in die eine oder andere verrastende Schaltstellung verschwenkt werden. Die Führungen für die Rastkurve verhindern eine unkontrollierte Bewegung derselben.

Vorteilhafterweise bewegen der oder die Elektromagnete die Rastkurve entgegen der Wirkung der Druckfedern. Hierbei registriert der Bordrechner die Schaltstellung, in der sich der Schalthebel befindet und spricht den korrespondierenden Elektromagneten an, der die Rastkurve zur Aufhebung der Verrastung entgegen der Federkraft beaufschlagt. Nach dem Rücksetzen des Elektromagneten kehrt die Rastkurve aufgrund der Federwirkung wieder in ihre Ausgangslage zurück.

Um die Montage der Druckfedern zu erleichtern und deren Wirkungsweise sicherzustellen, sind zweckmäßigerweise die Gehäusewände und/oder die Seitenwände bzw. die Rückwand der Rastkurve mit Ansätzen oder Sackbohrungen zur Fixierung der Druckfedern versehen.

Zur Gewährleistung der jeweiligen Endlage der Rastkurve ohne zusätzliche Bauteile dienen die Gehäusewände als Anschläge für die Rastkurve.

Bevorzugt beaufschlagt die Verstelleinrichtung die Rastkurve der Rastung und wirkt im wesentlichen senkrecht oder parallel zu einer Längsachse des Schalthebels. Die Verstelleinrichtung verursacht also lediglich geradlinige Bewegungen der Rastkurve, die einfacher zu realisieren sind als Schwenkbewegungen, die zur Betätigung des Schalthebels bei dessen Rücksetzung erforderlich wären.

Zweckmäßigerweise beaufschlagt die Verstelleinrichtung die Rastkurve kontinuierlich oder mittels eines Impulses. Falls zur Aufhebung der Verrastung die Rastkurve nur einen relativ geringen Weg zurücklegen muss, genügt ein stoßartiger Impuls der Verstelleinrichtung auf die Rastkurve, um das Rastelement des Schalthebels zurück zu bewegen, worauf die Rastkurve in ihre unverrastste Stellung zurückkehrt. Wenn das Zurücklegen relativ großer Wege oder eine relativ große Kraftübertragung erforderlich ist, beaufschlagt die Verstelleinrichtung die Rastkurve kontinuierlich.

Um eine kompakte Bauform und eine leicht handhabbare Einheit zur Verfügung zu stellen, ist vorteilhafterweise die Verstelleinrichtung in ein Gehäuse des Schalters integriert oder an demselben befestigt.

Bevorzugt ist der Bordrechner mit einem Lenkwinkelsensor gekoppelt und die Verstelleinrichtung betätigt in Abhängigkeit von einer Drehrichtung sowie einem Drehwinkel der Lenksäule die Rastkurve. Der mit der Lenksäule gekoppelte Lenkwinkelsensor erfasst permanent Drehrichtungs- und Drehwinkeländerungen der Lenksäule und liefert diese Daten zur Auswertung an den Bordrechner, der dann gegebenenfalls die Verstelleinrichtung beaufschlagt. Somit ist das Aufheben der Verrastung eines Blinkerschalters bei einer Drehrichtungsänderung der Lenksäule sichergestellt, ohne dass der Schalter in einem direkten mechanischen Kontakt zu der Lenksäule steht. Hierbei lassen sich den Messwerten des Lenkwinkelsensors selbstverständlich Toleranzbereiche zuordnen, so dass die Verstelleinrichtung nicht bei jeder noch so kleinen Drehrichtungsänderung von dem Bordrechner angesprochen wird.

Damit ein Herausspringen des federbelasteten Rastelementes aus dem Schalthebel beim Verschieben der Rastkurve zur Aufhebung der Verrastung wirksam verhindert wird, ist zweckmäßigerweise das Rastelement mitsamt der zugeordneten Druckfeder unverlierbar in dem Schalthebel gehalten. Hierbei ist das als Rasthülse ausgebildete Rastelement mit einem Bund versehen und in eine stirnseitige Stufenbohrung des Schalthebels eingesetzt.

Es versteht sich, dass die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen.

Die Erfindung wird im folgenden anhand zweier Ausführungsbeispiele unter Bezugnahme auf die zugehörigen Zeichnungen näher erläutert. Es zeigen:

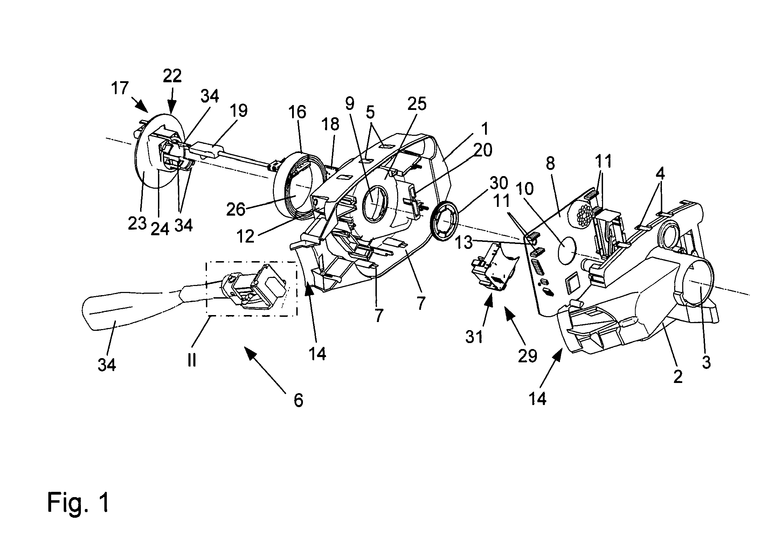

- Fig.1: eine Explosionsdarstellung eines Lenkstockschalters mit einem integrierten, verrastbaren Blinkerschalter, dem eine erfindungsgemäße Rückstelleinrichtung zugeordnet ist,

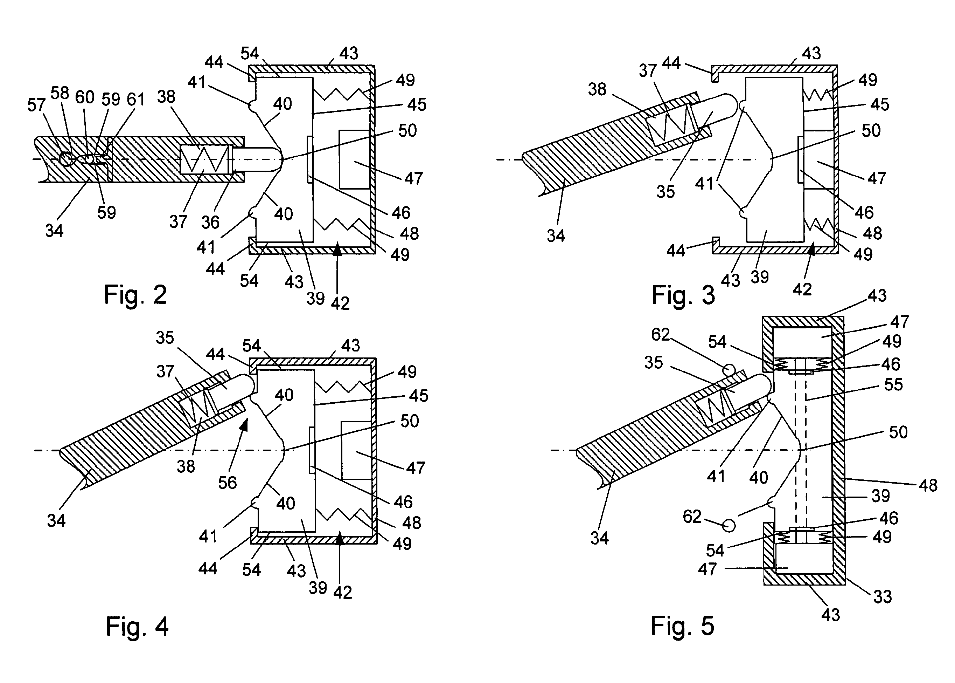

- Fig.2: eine vereinfachte Schnittdarstellung der Einzelheit II gemäß Fig. 1,
- Fig.3: die Darstellung der Einzelheit II nach Fig. 2 in einer anderen Stellung des Schalthebels,
- Fig.4: die Darstellung der Einzelheit II nach Fig. 3 in einer weiteren Stellung des Schalthebels und
- Fig.5: eine alternative Ausgestaltung der Einzelheit II gemäß Fig. 1 in einer vereinfachten Schnittdarstellung.

Der Lenkstockschalter umfasst ein aus einem Gehäuseoberteil 1 und einem Gehäuseunterteil 2 zusammengesetztes Gehäuse, wobei an dem Gehäuseunterteil 2 eine zylindrische Ausnehmung 3 zur Befestigung des Lenkstockschalters an einem nicht dargestellten Mantelrohr eines Kraftfahrzeuges ausgeformt ist. Im weiteren umfasst das Gehäuseunterteil 2 randseitige Klipsarme 4, die beim Zusammenfügen des Gehäuseunterteils 2 und des Gehäuseoberteils 1 in korrespondierende Klipsöffnungen 5 des Gehäuseoberteils 1 eingreifen, sowie nicht dargestellte Zentrieröffnungen, in die entsprechende Zentrieransätze 7 des Gehäuseoberteils 1 eingesetzt werden. Schließlich ist dem Gehäuseunterteil 2 eine Leiterplatte 8 zugeordnet, die mit einem Bordnetz sowie einem Bordrechner 32 des Kraftfahrzeuges gekoppelt ist.

Die Leiterplatte 8 weist eine mit der Ausnehmung 3 des Gehäuseunterteils 2 sowie mit einer Bohrung 9 des Gehäuseoberteils 1 fluchtende zylindrische Öffnung 10 zur Durchführung einer nicht dargestellten Lenksäule auf, deren freies Ende oberhalb des Gehäuseoberteils 1 mit einem Lenkrad verbunden ist. Weiterhin ist die Leiterplatte 8 mit Anschlüssen 11 für im wesentlichen gegenüberliegende Schalter 6 versehen, von denen lediglich einer dargestellt ist. Der als Blinkerschalter ausgebildete verrastbare Schalter 6 weist einen Schalthebel 34 auf, der einen Durchbruch 12 des Gehäuseoberteils 1 durchragt und der mittels leiterplattenseitige Durchgangsbohrungen 13 durchdringenden Verschraubungen an dem Gehäuseunterteil 2 festgelegt ist. Ferner ist die Leiterplatte 8 mit einem Zündschloss verbunden, das in eine zwischen dem Gehäuseoberteil 1 und dem Gehäuseunterteil 2 gebildete Öffnung 14 eingesetzt wird.

Das das Gehäuseunterteil 2 randseitig übergreifende Gehäuseoberteil 1 weist eine Aussparung zur Aufnahme eines elektrischen Leiters 16 einer elektrischen Verbindungseinrichtung 17 auf, die das Lenkrad über die Leiterplatte 8 mit dem Bordnetz koppelt. Der flexibel ausgebildete Leiter 16 ist in mehreren Windungen spiralförmig aufgewickelt und jeweils endseitig mit einer Anschlusseinheit 18, 19 versehen, wobei die eine Anschlusseinheit 18 in eine Führungsausnehmung 20 des Gehäuseoberteils 1 eingesetzt und mit der Leiterplatte 8 gekoppelt ist. Die andere Anschlusseinheit 19, die mit dem Lenkrad in Verbindung steht, ist in eine Öffnung eines Deckels 22 eingesetzt, der zur lenkradseitigen Befestigung einen Flansch 23 umfasst, an dem ein Ansatz 24 koaxial angeformt ist. Der Flansch 23 des Deckels 22 überdeckt den Leiter 16, der sich auf einem von dem Gehäuseoberteil 1 ausgebildeten Boden 25 abstützt. Der Ansatz 24 ist drehbar in den Boden 25 eingesetzt, wobei er einen von dem Leiter 16 gebildeten Freiraum 26 durchragt. Die seitliche Begrenzung des Leiters 16 wird von einer sich von einer Gehäuseoberseite zu dem Boden 25 erstreckenden Wandung des Gehäuseoberteils 1 gebildet.

Um eine relative Änderung des Drehwinkels des Lenkrades gegenüber dem Lenkstockschalter festzustellen, ist zwischen der Verbindungseinrichtung 17 und dem Gehäuseoberteil 1 des Lenkstockschalters ein Lenkwinkelsensor 29 angeordnet, der im wesentlichen aus einem Rotor 30 und einem Stator 31 besteht, wobei der Stator 31 über die Leiterplatte 8 mit dem Bordrechner 32 gekoppelt ist.

Der Schalter 6 umfasst einen gehäuseseitig schwenkbar gelagerten Schalthebel 34 mit einem als Rasthülse 35 ausgebildeten Rastelement. An der Rasthülse 35 ist ein Bund 36 angeformt, der zusammen mit einer Druckfeder 37 in eine Stufenbohrung 38 des Schalthebels 34 unverlierbar eingesetzt ist. Zur Verrastung des Schalthebels 34 in einer der Schaltstellungen des Schalters 6 wirkt die Rasthülse 35 mit einer gehäuseseitigen Rastkurve 39 zusammen. Die Rastkurve 39 ist im wesentlichen V-förmig gestaltet, wobei an den Enden der Schenkel 40 der V-Form kleine Nasen 41 ausgebildet sind und jede der Nasen 41 den Schalthebel 34 in einer seiner verrasteten Schaltstellungen hält. Um die Verrastung 56 des Schalthebels 34 aufzuheben, ist der Rastkurve 39 eine Verstelleinrichtung 42 zugeordnet. Damit der Schalthebel 34 stets in seine nicht verrastete Stellung zurückkehrt, ist an seinem Drehpunkt 57 eine Drehschenkelfeder 58 angeordnet, deren Schenkel 59 einen gehäusefesten Anschlag 60 sowie eine dem Schalthebel 34 zugeordnete Nase 61 umgreifen. Beim Verschwenken des Schalthebels 34 in eine verrastete Schaltstellung, wird die Drehschenkelfeder 58 gespannt und verschwenkt den Schalthebel 34 beim Aufheben der Verrastung 56 in seine Ausganglage. Ferner sind dem Schalthebel 34 gehäusefeste Anschläge 62 zugeordnet, die sein Verschwenken über eine vorbestimmte Endlage hinaus verhindern.

Die Rastkurve 39 ist zwischen Gehäusewänden 43 geführt, an deren freien Enden Anschläge 44 ausgebildet sind. In die Rückwand 45 der Rastkurve 39 ist eine metallische Platte 46 eingesetzt, die mit einem Elektromagneten 47 der Verstelleinrichtung 42 zusammenwirkt. Zwischen der Rückwand 45 der Rastkurve 39 und der korrespondierenden Gehäusewand 48, an der der Elektromagnet 47 befestigt ist, stützen sich Druckfedern 49 ab, die die Rastkurve 39 gegen die Anschläge 44 drücken. In dieser Stellung der Rastkurve 39 kann der Schalthebel 34 in eine verrastete Stellung verschwenkt werden, in der die Rasthülse 35 die zugeordnete Nase 41 der Rastkurve 39 hintergreift. Zum Aufheben der Verrastung 56 in Abhängigkeit von der Drehrichtung des Lenkrades erfasst der Bordrechner 32 die Daten des Lenkwinkelsensors 29 und spricht den Elektromagneten 47 an, der daraufhin die Platte 46 mitsamt der Rastkurve 39 entgegen der Wirkung der Druckfedern 49 anzieht, bis die Platte 46 auf dem Elektromagneten 47 zur Anlage kommt. Hierbei entfernt sich die Nase 41 der Rastkurve 39 hinter die Rasthülse 35 des Schalthebels 34 und dieser verschwenkt zwangsgesteuert in die nicht verrastete Stellung, in der die Rasthülse 35 in einem unteren Scheitelpunkt 50 der Rastkurve 39 einliegt. Nach einer vorgegebenen Zeitspanne oder nachdem der Bordrechner 32 registriert hat, dass sich der Schalthebel 34 in keiner der verrasteten Schaltstellungen befindet, beendet der Rechner die Stromzufuhr zu dem Elektromagneten 47 und die Rastkurve 39 gelangt unter der Wirkung der Druckfedern 49 wieder an die Anschläge 44 der Gehäusewände 43.

In einer alternativen Ausführung ist den gegenüberliegenden Seitenwänden 54 der Rastkurve 39 jeweils eine metallische Platte 46 zugeordnet und an den seitlichen Gehäusewänden 43 ist jeweils ein zu einer Platte 46 korrespondierender Elektromagnet 47 befestigt, wobei zwischen dem Elektromagneten 47 und der zugeordnete Seitenwand 54 vorgespannte Druckfedern 49 angeordnet sind. Die Rastkurve 39 ist mittels einer Führung 55 im wesentlichen senkrecht zu der Längsachse des Schalthebels 34 beweglich zwischen den seitlichen Gehäusewänden 43 gelagert. Befindet sich der Schalthebel 34 in einer der verrasteten Schaltstellungen des Schalters 6, in der die Rasthülse 35 die zugeordnete Nase 41 der Rastkurve 39 hintergreift und soll die Verrastung 56 aufgehoben werden, so spricht der Bordrechner 32 den Elektromagneten 47 an, der sich auf der der Verrastung 56 zugeordneten Seite des Schalters 6 befindet. Daraufhin zieht der Elektromagnet 47 die Platte 46 und somit auch die Rastkurve 39 entgegen der Wirkung der zugeordneten Druckfedern 49 an und die Rasthülse 35 gleitet zwangsgesteuert über die Nase 41 und dann auf dem entsprechenden Schenkel 40 der Rastkurve 39 in eine nicht verrastete Position, in der sie im Scheitelpunkt 50 in der Rastkurve 39 einliegt. Nach dem Aufheben der Verrastung 56 unterbricht der Bordrechner 32 die Stromzufuhr zu dem Elektromagnet 47 und die Rastkurve 39 kehrt unter der Wirkung der Druckfedern 49 in ihre Ausgangslage zurück, in der sie zwischen den entsprechend ausgelegten Druckfedern 37 gehalten wird.

### Bezugszeichenliste

- 1.: Gehäuseoberteil
- 2.: Gehäuseunterteil
- 3.: Ausnehmung
- 4.: Klipsarm
- 5.: Klipsöffnung
- 6.: Schalter
- 7.: Zentrieransatz
- 8.: Leiterplatte
- 9.: Bohrung
- 10.: Öffnung
- 11.: Anschluss
- 12.: Durchbruch
- 13.: Durchgangsbohrung
- 14.: Öffnung
- 15.:
- 16.: Leiter
- 17.: Verbindungseinrichtung
- 18.: Anschlusseinheit
- 19.: Anschlusseinheit
- 20.: Führungsausnehmung
- 21.:
- 22.: Deckel
- 23.: Flansch
- 24.: Ansatz
- 25.: Boden
- 26.: Freiraum
- 27.:
- 28.:
- 29.: Lenkwinkelsensor
- 30.: Rotor
- 31.: Stator
- 32.: Bordrechner
- 33.:
- 34.: Schalthebel
- 35.: Rasthülse
- 36.: Bund
- 37.: Druckfeder
- 38.: Stufenbohrung
- 39.: Rastkurve
- 40.: Schenkel
- 41.: Nase
- 42.: Verstelleinrichtung
- 43.: Gehäusewand
- 44.: Anschlag
- 45.: Rückwand
- 46.: Platte
- 47.: Elektromagnet
- 48.: Gehäusewand
- 49.: Druckfeder
- 50.: Scheitelpunkt
- 51.:
- 52.:
- 53.:
- 54.: Seitenwand
- 55.: Führung
- 56.: Verrastung
- 57.: Drehpunkt
- 58.: Drehschenkelfeder
- 59.: Schenkel
- 60.: Anschlag
- 61.: Nase
- 62.: Anschlag

## Patentansprüche

1. Rückstelleinrichtung für einen Schalter (6) eines Kraftfahrzeuges, insbesondere eines Blinkerschalters, mit einem schwenkbar gelagerten, verrastbaren Schalthebel (34) mit einem federbelasteten Rastelement, das mit mindestens einer Schaltstellung einer gehäuseseitigen Rastkurve (39) zusammenwirkt, wobei eine elektromechanische Verstelleinrichtung (42) rechnergesteuert die Verrastung (56) des Schalthebels (34) aufhebt, **dadurch gekennzeichnet, dass** die Verstelleinrichtung (42) mindestens einen Elektromagneten (47) umfasst, der rechnergesteuert aktiviert auf die magnetische oder mit einer magnetischen Platte (46) versehene Rastkurve (39) wirkt und die Verrastung (56) des Schalthebels (34) löst.

2. Rückstelleinrichtung nach Anspruch 1, **dadurch gekennzeichnet, dass** die Platte (46) in jeweils eine Seitenwand (54) oder die Rückwand (45) der Rastkurve (39) eingelassen und jeder Platte (46) ein Elektromagnet (47) zugeordnet ist.

3. Rückstelleinrichtung nach Anspruch 1 oder 2, **dadurch gekennzeichnet, dass** die Rastkurve (39) in dem Gehäuse (33) geführt ist, wobei zwischen den die Platten (46) aufweisenden Seitenwänden (54) sowie den dazu korrespondierenden Gehäusewänden (43) Druckfedern (49) angeordnet sind, die die Rastkurve (39) in ihrer Ausgangslage halten.

4. Rückstelleinrichtung nach einem der Ansprüche 3 bis 3, **dadurch gekennzeichnet, dass** der oder die Elektromagneten (47) die Rastkurve (39) entgegen der Wirkung der Druckfedern (49) bewegen.

5. Rückstelleinrichtung nach einem der Ansprüche 1 bis 4, **dadurch gekennzeichnet, dass** die Gehäusewände (43, 48) und/oder die Seitenwände (54) bzw. die Rückwand (45) der Rastkurve (39) mit Ansätzen oder Sackbohrungen zur Fixierung der Druckfedern (49) versehen sind.

6. Rückstelleinrichtung nach einem der Ansprüche 1 bis 4, **dadurch gekennzeichnet, dass** die Gehäusewände (43, 48) als Anschläge (44) für die Rastkurve (39) dienen.

7. Rückstelleinrichtung nach Anspruch 1, **dadurch gekennzeichnet, dass** die Verstelleinrichtung (42) die Rastkurve (39) der Rastung beaufschlagt und im wesentlichen senkrecht oder parallel zu einer Längsachse des Schalthebels (34) wirkt.

8. Rückstelleinrichtung nach Anspruch 1 oder 7, **dadurch gekennzeichnet, dass** die Verstelleinrichtung (42) die Rastkurve (39) kontinuierlich oder mittels eines Impulses beaufschlagt.

9. Rückstelleinrichtung nach einem der Ansprüche 1 bis 8, **dadurch gekennzeichnet, dass** die Verstelleinrichtung (42) in ein Gehäuse des Schalters (6) integriert oder an demselben befestigt ist.

10. Rückstelleinrichtung nach einem der Ansprüche 1 bis 9, **dadurch gekennzeichnet, dass** der Bordrechner (32) mit einem Lenkwinkelsensor (29) gekoppelt ist und die Verstelleinrichtung (42) in Abhängigkeit von einer Drehrichtung sowie einem Drehwinkel der Lenksäule die Rastkurve (39) betätigt.

11. Rückstelleinrichtung nach Anspruch 1, **dadurch gekennzeichnet, dass** das Rastelement mitsamt der zugeordneten Druckfeder (37) unverlierbar in dem Schalthebel (34) gehalten ist.

12. Rückstelleinrichtung nach Anspruch 11, **dadurch gekennzeichnet, dass** das als Rasthülse (35) ausgebildete Rastelement mit einem Bund (36) versehen und in eine stirnseitige Stufenbohrung (38) des Schalthebels (34) eingesetzt ist.
